# EUROPEAN PATENT APPLICATION

(11) **EP 1 724 884 A1**
(43) Date of publication of application: **22.11.2006**
(21) Application number: 06009978.5
(22) Date of filing: 15.05.2006
(51) Int. Cl.: H01R 13/658, G02B 6/42

(54) **Pluggable module and cage**

(30) Priority: 19.05.2005 JP 2005146328; 20.01.2006 JP 2006012094
(71) Applicant: OpNext Japan, Inc., Yokohama-shi, Kanagawa 224-8567 (JP)
(72) Inventor: Morohashi, Naofumi c/o Hitachi, Ltd., Chiyoda-ku Tokyo 100-8220 (JP); Motohiro, Satoshi c/o Hitachi, Ltd., Chiyoda-ku Tokyo 100-8220 (JP); Endoh, Futoshi c/o Hitachi, Ltd., Chiyoda-ku Tokyo 100-8220 (JP)
(74) Representative: Strehl Schübel-Hopf & Partner

(57) **Abstract**

Nonconductive material sheets are mounted on both side faces of a case of an optical transceiver module.
Alternatively, both the side faces of the case of the optical transceiver module are finished to have surface roughness of 2.4a or less. Alternatively, at least sliding surfaces of a pair of flat springs for grasping a pluggable module in a cage is formed of a nonconductive material.

## Description

### Background of the Invention

### Field of the Invention

The present invention relates to a pluggable module and a cage, and particularly relates to a pluggable module and a cage in which production of metal powder due to insertion and drawing of the pluggable module is suppressed.

### Description of Related Art

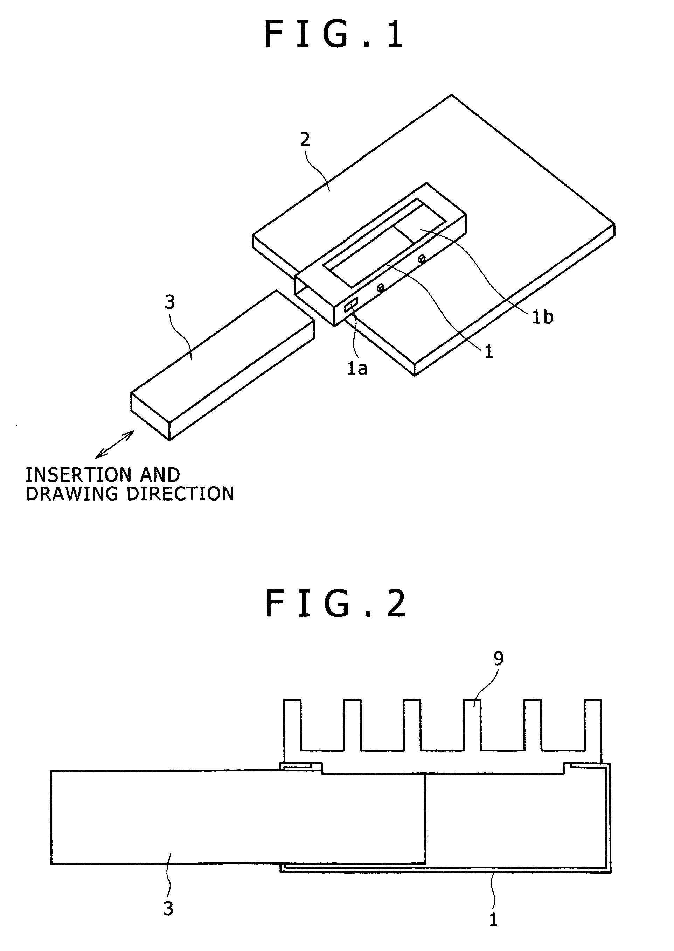

A plurality of venders of optical transceiver modules have designed and manufactured optical modules in the same specification under multi-source agreement (MSA). A specification of an optical transceiver module for 10 Gbits (XFP: 10 Gigabit Small Form Factor Pluggable) is described in "10 Gigabit Small Form Factor Pluggable Module" by SFF Committee. A structure of XFP is briefly described using Fig. 1. A printed circuit board 2 on which an electronic circuit is formed is attached with a box-type cage 1 having a slot-like opening and an upper opening. The cage 1 is formed by sheet metal processing, and a surface of the cage is subjected to tinning. An electric contact 1b is provided at a back of the cage 1 to be electrically connected to an optical transceiver module 3 inserted from the opening.

Flat springs 1a are welded to side faces of the cage 1. The flat springs are fitted with not-shown hole portions in side faces of the optical transceiver module 3 at a time point when the cage 1 is electrically connected to the optical transceiver module 3. As a result, the flat springs 1a latch the optical transceiver module 3. When the optical transceiver module 3 is drawn out, the flat springs are reset by a latch release mechanism (not shown) provided in the cage 1, and then the module is drawn out. When the optical transceiver module 3 is inserted and drawn with respect to the cage 1, the flat springs 1a slide on side faces of the optical transceiver module 3.

An aluminum heat sink 9 is attached to the upper opening of the cage 1 as shown in Fig. 2. The heat sink 9 is for heat radiation of the optical transceiver module 3, and the heat sink and the module need to be closely adhered to each other to reduce heat resistance. That is, when the optical transceiver module 3 is inserted and drawn with respect to the cage 1 with the heat sink 9 attached, the heat sink 9 slides on a top of the optical transceiver module 3.

While the cage, heat sink, and optical transceiver module 3 are integrally used, a user of the optical transceiver module 3 purchases each of them from different venders respectively. Moreover, the optical transceiver module is not exclusively inserted into the cage, and a transceiver module of an electric interface may be inserted. Such modules are called pluggable modules.

When an optical transceiver module with a metal case is inserted and drawn with respect to the cage, waste metal is produced in one of the flat springs, heat sink, and metal case due to metal-to-metal rubbing.

The waste metal produced in this way may cause short-circuit among electronic components mounted on the printed circuit board 2 or wiring lines depending on size of the waste metal. When a case of the optical transceiver module is formed of a nonconductive material such as plastic as a measure for this, a heat radiation effect is reduced.

### Summary of the Invention

A sliding portion of the module to the cage is formed of a member that is nonconductive and low in hardness compared with a member at a cage side. Alternatively, surface roughness of the portion that slides to the cage or the heat sink is designed to be 2.4a or less.

As another measure, at least sliding surfaces of a pair of flat springs for grasping a pluggable module having a metal case in a cage, which holds the pluggable module and is mounted on a printed circuit board, are formed of a nonconductive material.

Moreover, a nonconductive material is used for contact surfaces of the cage which holds the pluggable module having the metal case and is mounted on the printed circuit board, and at least three faces of the nonconductive material cage are covered with a metal case.

### Brief Description of the Drawings

Preferred embodiments of the present invention will now be described in conjunction with the accompanying drawings, in which:
Fig. 1 is a perspective view for describing a relationship between XFP and a cage;
Fig. 2 is a perspective side view for describing a relationship between a heat sink and the XFP;
Fig. 3 is a perspective view for describing an insertion condition of an optical transceiver module into the cage;
Fig. 4 is a front view of the optical transceiver module;
Fig. 5 is a front view of a modification of the optical transceiver module;
Fig. 6 is a graph for describing a relationship between mass of waste metal produced due to sliding to flat springs and surface roughness of a case;
Fig. 7 is a graph for describing a relationship between maximum length of the waste metal produced due to the sliding to the flat springs and surface roughness of the case;
Fig. 8 is a perspective view of a cage; and
Fig. 9 is a perspective view of another cage.

### Description of the Preferred Embodiments

Hereinafter, preferred embodiments of the invention will be described with reference to drawings. While the following embodiments are described in conjunction with an optical transceiver module, the embodiments of the invention can be applied to pluggable modules such as an electric transceiver module, optical transmitter module and optical receiver module.

### Embodiment 1

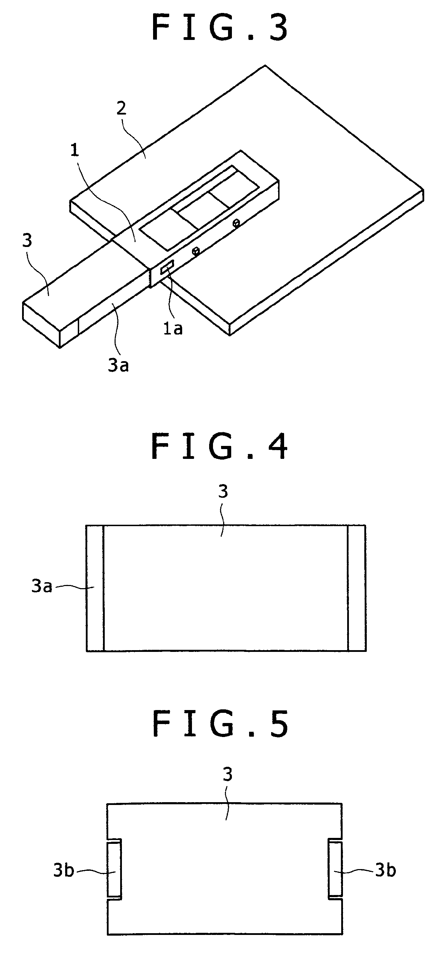

Embodiment 1 is described using Figs. 3 to 5. Here, Fig. 3 is a perspective view for describing an insertion condition of the optical transceiver module into a cage. Figs. 4 and 5 are front views of the optical transceiver module.

In Fig. 3, an optical transceiver module 3 in which an acrylic sheets 3a are adhered to both side faces are inserted into a cage 1 mounted on a printed circuit board 2. As shown in Fig. 4, the acrylic sheets 3a are attached over a full range of side faces of the optical transceiver module 3 in a longitudinal direction along which the module slides to flat springs 1a. An outside dimension of the optical transceiver module after adhesion is designed to be 18.35 mm as defined by MSA under setting that the thickness of the acryl (methyl methacrylate) sheet is 0.1 mm, the thickness of an adhesive layer in adhesion is 0.05 mm, and the width of a case of the optical transceiver module 3 manufactured by casting is 18.05 mm.

In the embodiment, since the flat spring 1a as metal and acryl as plastic slide to each other, a relatively weak acryl is necessarily scraped. However, since acryl is nonconductive, even if waste of the acryl is produced, short-circuit is not caused in a printed circuit board due to the waste.

While the acrylic sheets as nonconductive plastic were used in the embodiment, the sheets are not limited to these as long as they are nonconductive, and preferably those having hardness that is close to and lower than hardness of the flat spring. Resin having an excellent sliding property such as tetrafluoroethylene may be used.

According to the embodiment, the waste metal may not be produced while using metal having high heat radiation for a case material.

Here, a modification of the embodiment 1 is described using Fig. 5. In Fig. 5, both side faces of the case of the optical transceiver module 3 have grooves 4. 5 mm in width and 0.15 mm in depth formed in centers in a height direction of the side faces, and adhered with acrylic sheets 3b having 4.0 mm in width and 0.1 mm in thickness. Here, the width of the acrylic sheets 3b is determined according to a fact that a dimension of the flat spring is 3.0 mm in this direction. Therefore, a minimum dimension of the width of the acrylic sheets 3b is 3.0 mm, however, more preferably the width is 4.0 mm.

According to the modification, the waste metal may not be produced while using the metal having high heat radiation for the case material as well.

### Embodiment 2

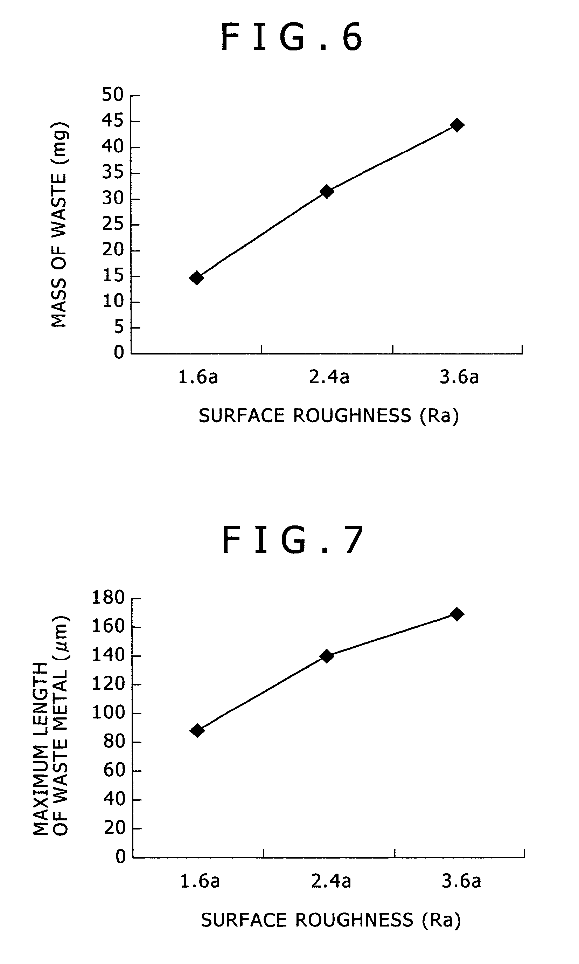

Embodiment 2 is described using Figs. 6 and 7. Here, Fig. 6 is a graph for describing a relationship between mass of waste metal produced due to sliding to flat springs and surface roughness of a case. Fig. 7 is a graph for describing a relationship between maximum length of the waste metal produced due to the sliding to the flat springs and surface roughness of the case.

In description of Fig. 2, the heat sink 9 was described to slide on the top of the optical transceiver module 3 in insertion and drawing of the optical transceiver module 3 with respect to the cage 1 with the heat sink 9 attached. However, since the heat sink is surface-contacted to the optical transceiver module, large force is necessary for insertion and drawing of the optical transceiver module 3 with respect to the cage 1 with the heat sink 9 attached.

The inventors conducted the following experiment under consideration that even if the waste metal is produced due to sliding to the heat sink, when surface roughness of the case of the optical transceiver module is small, the amount of the waste metal is decreased, and maximum length of the waste metal is reduced. In the experiment, three types of samples were used: a sample having surface roughness of 3.2a (by Ra) of side faces of the case after casting, a sample having surface roughness of 2.4a of the side faces of the case via surface polishing, and a sample having surface roughness of 1.6a of the side faces of the case via surface polishing. In the experiment, the insertion and drawing were carried out 50 times with respect to the cage in a configuration of Fig. 1 to allow sliding between the flat springs and both side faces of the case, then produced waste metal was collected, and then mass and the maximum length of the waste metal were measured.

In Fig. 6, while the mass of the waste metal was 45 mg at the surface roughness of 3.6a, the mass was decreased to 15 mg, namely one third, at 1.6a. In Fig. 7, while the maximum length of the waste metal was 170 µm (by micrometer) at the surface roughness of 3.6a, the maximum length was decreased to 90 µm, namely one half, at 1.6a.

Since the insertion and drawing are not actually performed so many times as 50 times, according to knowledge of the inventors, regarding production of the waste metal, when the side faces of the case are finished to have surface roughness of about 2.4a (peak-to-peak of about 5 µm), the case can be used for XFP. More preferably, the surface roughness is about 1.6a (peak-to-peak of about 3 µm).

Similarly, when a top of the case is finished to have surface roughness of about 2.4a (peak-to-peak of about 5 µm), the case can be used for the optical transceiver module. More preferably, the surface roughness is about 1.6a (peak-to-peak of about 3 µm). According to such surface processing, an air layer as a heat insulating layer between the optical transceiver module and the heat sink is reduced in thickness, and consequently improvement in heat radiation can be achieved.

The surface processing includes a chemical process such as surface treatment in addition to a mechanical process such as the surface polishing, however, they are not restrictive.

According to the embodiment, the amount of the waste metal can be significantly decreased while using the metal having high heat radiation for the case material. Moreover, heat radiation can be improved.

### Embodiment 3

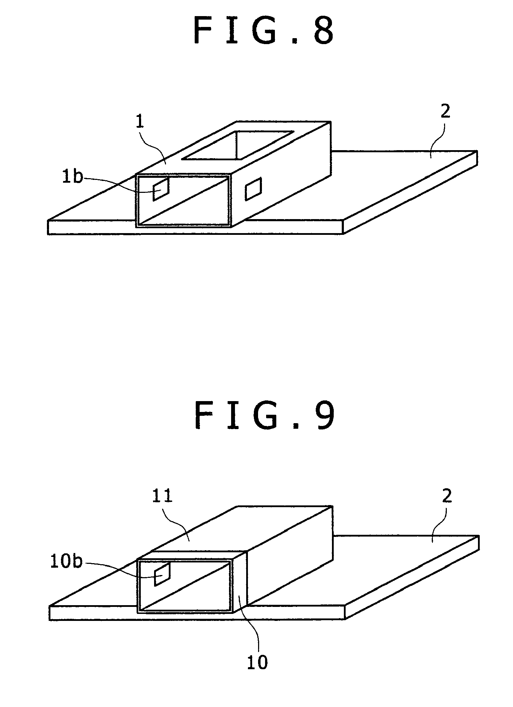

Embodiment 3 is described using Figs. 8 and 9. Here, Figs. 8 and 9 are perspective views of the cage. The cage 1 shown in Fig. 8 is mounted on the printed circuit board 2. The flat springs 1b on the cage 1 are in a structure where the flat springs on the cage 1 are coated with tetrafluoroethylene in thickness of 0.5 mm on sliding surfaces of the flat springs to the optical transceiver module, and welded to the cage 1 at uncoated portions. The printed circuit board 2 is mounted with surface wiring and an electronic component which are not shown. The flat springs 1b are formed in pair to grasp the optical transceiver module in the cage 1.

Coating of tetrafluoroethylene, which is engineering plastic having an excellent sliding property, on the flat springs allows the flat springs 1b to have both of spring and sliding properties.

In Fig. 9, a cage 10 is mounted on the printed circuit board 2. In the periphery of the cage 10, an aluminum metal case 11 is mounted on the printed circuit board 2. The cage 10 is formed by molding of polybutylene terephthalate (PBT). The printed circuit board 2 is mounted with surface wiring and an electronic component which are not shown.

PBT is engineering plastic having the spring property and excellent wear resistance. Therefore, if the flat springs 10b slide to the optical transceiver module, the springs do not substantially wear, and even if they wear, only the nonconductive waste is produced. Here, the metal case 11 is grounded by the printed circuit board 2, and provides EMI shield for at least three faces of the cage 10. A contact portion of the cage 10 to the printed circuit board 2 is shielded by the printed circuit board 2. Here, a cage including the metal case is sometimes called cage.

According to the embodiment, at least a sliding portion of the cage to the optical transceiver module is made nonconductive, thereby production of the waste metal can be suppressed.

According to embodiments of the invention, waste metal produced due to sliding to the cage or the heat sink can be decreased.

## Claims

1. A pluggable module that is inserted and drawn with respect to a cage having flat springs for latch with a face sliding to the flat springs,
wherein a sliding portion of the face to the flat springs is formed of a member that is nonconductive and low in hardness compared with the flat springs.

2. The pluggable module according to claim 1,
wherein said member is a member of methyl methacrylate or tetrafluoroethylene.

3. A pluggable module that is inserted and drawn with respect to a cage having flat springs for latch with a face sliding to the flat springs,
wherein a sliding portion of the face is subjected to surface processing to have surface roughness of 2.4a or less.

4. A pluggable module that is inserted and drawn with respect to a cage attached with a heat sink with a face sliding to the heat sink,
wherein a sliding portion of the face is subjected to surface processing to have surface roughness of 2.4a or less.

5. The pluggable module according to claim 3,
wherein said sliding portion of the face is subjected to surface processing to have surface roughness of 1. 6a or less.

6. The pluggable module according to claim 4,
wherein said sliding portion of the face is subjected to surface processing to have surface roughness of 1. 6a or less.

7. A cage that holds a pluggable module having a metal case, and is mounted on a printed circuit board,
wherein at least sliding surfaces of a pair of flat springs for grasping the pluggable module are formed of a nonconductive material.

8. The cage according to claim 7,
wherein said nonconductive material is tetrafluoroethylene or polybutylene terephthalate.

9. A cage that holds a pluggable module having a metal case, and is mounted on a printed circuit board,
wherein a nonconductive material is used for contact surfaces to the pluggable module, and at least three faces of the nonconductive material surfaces are covered with a metal case.

10. The cage according to claim 9,
wherein said nonconductive material is polybutylene terephthalate.
